# EUROPEAN PATENT APPLICATION

(11) **EP 3 605 070 A1**
(43) Date of publication of application: **05.02.2020**
(21) Application number: 17901978.1
(22) Date of filing: 30.11.2017
(51) Int. Cl.: G01N 21/84, F21S 2/00, H05B 37/02, F21Y 115/10

(54) **ILLUMINATION DEVICE, ILLUMINATION METHOD, AND IMAGING DEVICE**

(30) Priority: 23.03.2017 JP 2017057449
(71) Applicant: SCREEN Holdings Co., Ltd., Kyoto-shi, Kyoto 602-8585 (JP)
(72) Inventor: UMAKOSHI, Shoichi, Kyoto-shi Kyoto 602-8585 (JP)
(74) Representative: Goddar, Heinz J.
(86) International application number: PCT/JP2017/043020
(87) International publication number: WO 2018/173370

(57) **Abstract**

In order to provide an illumination technique capable of illuminating an object in a plurality of illumination modes with a reduced size and at low cost, an illumination device comprises: a light emitter including first light emitting elements and second light emitting elements configured to emit light toward the object; an optical system including a first optical element configured to change a light distribution of light emitted from the first light emitting elements to a first light distribution, the optical system introducing light emitted from the second light emitting elements with a second light distribution different from the first light distribution to the object; and an illumination controller configured to mutually independently control the light emission of the first light emitting elements and the second light emitting elements.

## Description

### [Technical Field]

This invention relates to an illumination device and an illumination method for illuminating an object and an imaging apparatus using the illumination device.

### Cross Reference to Related Application

Contents disclosed in the specification, drawings and claims of the following Japanese Patent Application are all incorporated herein by reference.

Japanese Patent Application No. 2017-57449 (filed on March 23, 2017)

### [Background Art]

An illumination technique for illuminating an object is utilized in various fields. As one mode of the illumination technique, an inspection apparatus for imaging an object by irradiating light to the object and inspecting the appearance of the object based on the captured image is described, for example, in patent literature 1. This apparatus is equipped with a light source unit for illuminating an object on a stage. The light source unit includes an upper light source for illuminating the object on the stage immediately from above, a plurality of oblique light sources for illuminating the object from an oblique upper side, and a plurality of lateral light sources for laterally illuminating the object. Out of these, the oblique light sources and the lateral light sources are arranged at equal intervals to surround the stage. In this light source unit, the light sources corresponding to a target area of the object desired to be imaged are selectively designated, and illumination light is irradiated to the object from these light sources. The illuminated target area is imaged by an imaging unit.

### [Prior Art Literature]

### [Patent Literature]

[Patent Literature 1] JP 2016-57075A

### [Summary of Invention]

### [Technical Problem]

Each light source adopted in the apparatus described in patent literature 1 has a single light distribution. For example, the lateral light source is set to irradiate light to a half of the target area. Thus, illumination conditions necessary to capture an image useful for inspection may not be obtained depending on the shape and surface state of an object to be inspected. For example, to avoid shadows by illumination, it is useful to illuminate with a wide light distribution in many directions. Further, to inspect a damage or the like of an object surface, it is preferable to specify an illumination direction by narrowing a light distribution and observe scattered light of illumination light in a damaged part. Although there is a request to change an illumination mode according to the shape and surface state of the object or the content of inspection in this way, it is difficult to satisfy this request by the conventional light sources.

Here, it is also considered to prepare a plurality of light sources having mutually different light distributions and cause the light sources to selectively emit light according to the illumination mode to adapt to a plurality of illumination modes, but the enlargement of the illumination device and an increase of apparatus cost are unavoidable in this case.

This invention was developed in view of the above problem and aims to provide an illumination technique capable of illuminating an object in a plurality of illumination modes with a reduced size and at low cost and provide an imaging technique capable of suitably imaging an object using the illumination technique.

### [Solution to Problem]

A first aspect of the invention is an illumination device for illuminating an object, comprising: a light emitter including first light emitting elements and second light emitting elements configured to emit light toward the object; an optical system including a first optical element configured to change a light distribution of light emitted from the first light emitting elements to a first light distribution, the optical system introducing light emitted from the second light emitting elements with a second light distribution different from the first light distribution to the object; and an illumination controller configured to mutually independently control the light emission of the first light emitting elements and the second light emitting elements.

A second aspect of the invention is an illumination method of illuminating an object using first light emitting elements and second light emitting elements, the illumination method enabling a light distribution of light for illuminating an object to be adjusted by performing at least one of: a first illumination operation of introducing light obtained by changing a light distribution of light emitted from the first light emitting elements as first illumination light to the object; and a second illumination operation of introducing light obtained by changing a light distribution of light emitted from the second light emitting elements to a light distribution different from the light distribution of the first illumination light or light emitted from the second optical element as second illumination light to the object; by mutually independently controlling the light emission of the first light emitting elements and the second light emitting elements.

A third aspect of the invention is an imaging apparatus, comprising: a stage configured to hold an object; the above illumination device configured to illuminate the object held on the stage; and an imager configured to image the object illuminated by the illumination device.

In the invention thus configured, when only the first light emitting elements emit light, out of the first and second light emitting elements, the object is illuminated with the light having the first light distribution. On the other hand, when only the second light emitting elements emit light, the object is illuminated with the light having the second light distribution. Further, when both the first and second light emitting elements emit light, the object is illuminated with another light distribution obtained by combining the first and second light distributions. That is, the object is illuminated in a plurality of illumination modes by selecting the light emission of the first light emitting elements and the second light emitting elements without providing the light emitter for each illumination mode.

### [Effects of Invention]

As described above, according to the invention, the object can be illuminated in a plurality of illumination modes while avoiding the enlargement of the device and a cost increase by mutually independently controlling the light emission of the first light emitting elements and the second light emitting elements.

All of a plurality of constituent elements of each aspect of the invention described above are not essential and some of the plurality of constituent elements can be appropriately changed, deleted, replaced by other new constituent elements or have limited contents partially deleted in order to solve some or all of the aforementioned problems or to achieve some or all of effects described in this specification. Further, some or all of technical features included in one aspect of the invention described above can be combined with some or all of technical features included in another aspect of the invention described above to obtain one independent form of the invention in order to solve some or all of the aforementioned problems or to achieve some or all of the effects described in this specification.

### [BRIEF DESCRIPTION OF DRAWINGS]

FIG. 1 is a diagram showing a first embodiment of an illumination device according to the invention, wherein an entire configuration is shown in field (c) of FIG. 1.
FIG. 2 is a diagram schematically showing illumination modes of an object 2 by the illumination device shown in FIG. 1.
FIG. 3 is a diagram showing a second embodiment of the illumination device according to the invention.
FIG. 4 is a diagram showing a third embodiment of the illumination device according to the invention.
FIG. 5 is a diagram showing a first embodiment of the inspection apparatus equipped with the illumination device according to the invention.
FIG. 6 is a diagram schematically showing illumination modes and imaging modes in the inspection apparatus shown in FIG. 5.
FIG. 7A is a diagram showing a second embodiment of the inspection apparatus equipped with the illumination device according to the invention.
FIG. 7B is a diagram showing a third embodiment of the inspection apparatus equipped with the illumination device according to the invention.
FIG. 7C is a diagram showing a fourth embodiment of the inspection apparatus equipped with the illumination device according to the invention.
FIG. 8A is a diagram showing a fifth embodiment of the inspection apparatus equipped with the illumination device according to the invention.
FIG. 8B is a plan view in section along line B-B in FIG. 8A.
FIG. 8C is a diagram schematically showing a connection relationship of an illumination head and an illumination controller.
FIG. 9A is a diagram showing a sixth embodiment of the inspection apparatus equipped with the illumination device according to the invention.
FIG. 9B is a partial plan view of the inspection apparatus shown in FIG. 9A.
FIG. 10A is a diagram showing the seventh embodiment of the inspection apparatus equipped with the illumination device according to the invention.
FIG. 10B is a diagram schematically showing a moving operation of illumination heads in the inspection apparatus shown in FIG. 10A.
FIG. 11A is a diagram showing an eighth embodiment of the inspection apparatus equipped with the illumination device according to the invention.
FIG. 11B is a diagram showing a ninth embodiment of the inspection apparatus equipped with the illumination device according to the invention.
FIG. 12 is a diagram showing a ninth embodiment of the inspection apparatus equipped with the illumination device according to the invention.
FIG. 13 is a diagram showing a tenth embodiment of the inspection apparatus equipped with the illumination device according to the invention.
FIG. 14 is a diagram showing an eleventh embodiment of the inspection apparatus equipped with the illumination device according to the invention.

### [Embodiment]

### A. Illumination Device

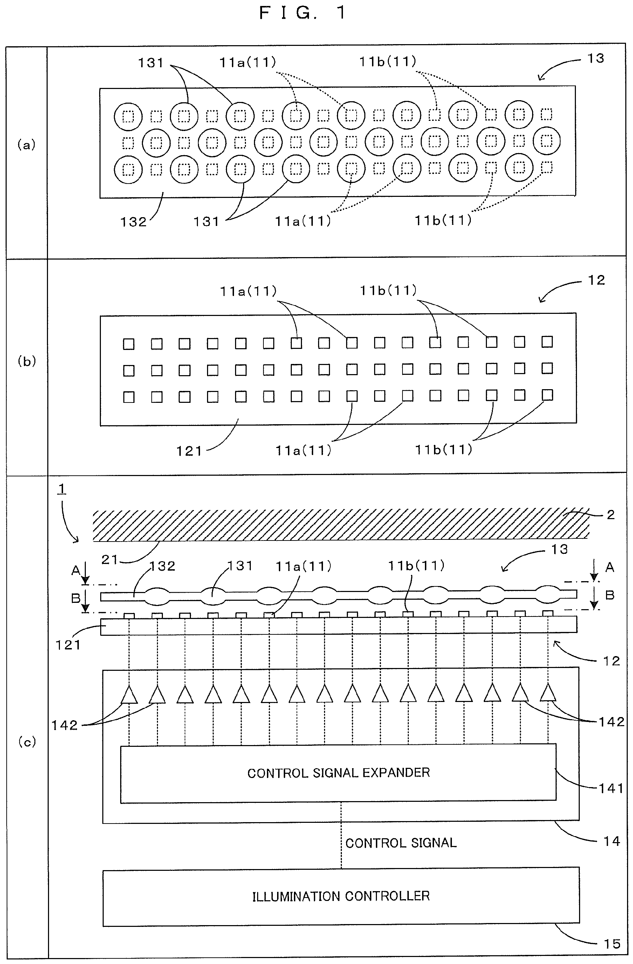

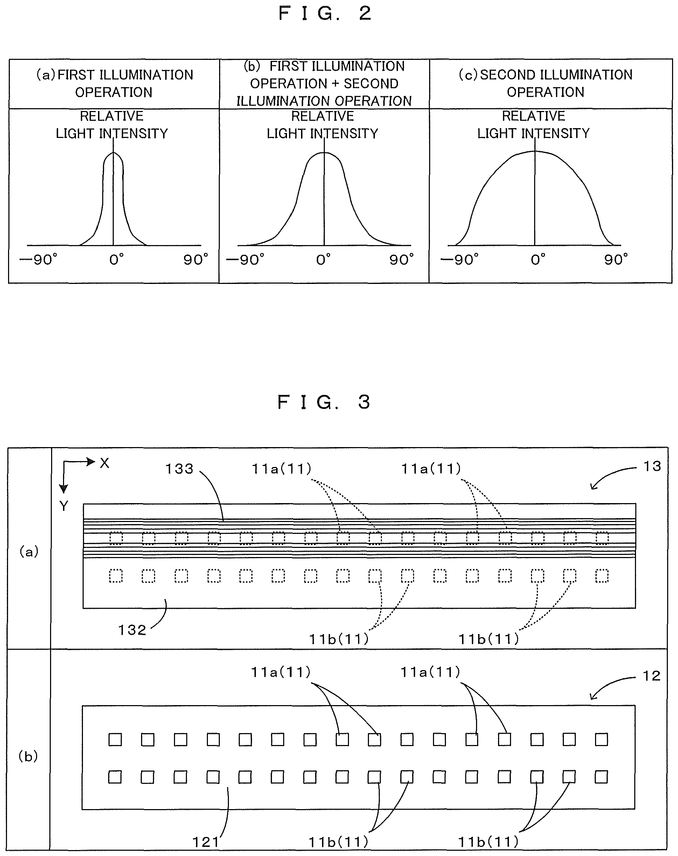

FIG. 1 is a diagram showing a first embodiment of an illumination device according to the invention, wherein an entire configuration is shown in field (c) of FIG. 1, and sectional views along line A-A and line B-B in field (c) are respectively shown in fields (a) and (b). Further, FIG. 2 is a diagram schematically showing illumination modes of an object 2 by the illumination device shown in FIG. 1. The illumination device 1 is a device for illuminating the object 2 and includes, as shown in FIG. 1, a light emitter 12 including a plurality of light emitting elements 11, an optical system 13 for introducing light emitted from each light emitting element 11 to an area to be illuminated 21 of the object 2, a drive unit 14 for driving each light emitting element 11, and an illumination controller 15 for mutually independently controlling the light emission of each light emitting element 11.

In the light emitter 12, a plurality of light emitting elements 11 are arranged in a 3x16 matrix on a substrate 121 as shown in fields (a) and (b) of FIG. 1. Half of these light emitting elements 11 function as "first light emitting elements" of the invention, whereas the remaining half of the light emitting elements 11 function as "second light emitting elements" of the invention. These first and second light emitting elements are alternately arranged. In this specification, the first light emitting elements and the second light emitting elements are respectively referred to as "first light emitting elements 11a" and "second light emitting elements 11b" as appropriate to be distinguished.

To correspond to the light emitter 12 including two types of light emitting elements 11a, 11b as just described, a plurality of condenser lenses 131 are provided as an example of a "first optical element" of the invention in the optical system 13. More particularly, in the optical system 13, the plurality of condenser lenses 131 are provided to face the first light emitting elements 11a in a one-on-one manner on a transparent base material 132 in the form of a parallel plate arranged on an object side (upper side in field (c) of FIG. 1) of the light emitter 12. The transparent base material 132 is made of a material that transmits light emitted from the light emitting elements 11. Thus, when the light emitting elements 11a emit light, the light emitted from the light emitting elements 11a is introduced to the area to be illuminated 21 of the object 2 while being condensed by the condenser lenses 131. On the other hand, when the light emitting elements 11b emit light, the light emitted from the light emitting elements 11b is directly introduced to the area to be illuminated 21 of the object 2 without passing through the condenser lenses 131.

Each light emitting element 11 emits light in accordance with a control signal given from the illumination controller 15. This control signal includes serial data relating to light modulation by turning on/off of each light emitting element 11 and pulse width modulation (PWM). The driving unit 14 configured to receive this control signal includes a control signal expander 141 and drivers 142 provided one-on-one with the light emitting elements 11. The driving unit 14 generates data (forward current value of the light emitting elements 11, light modulation value by PWM, turning on/off) relating to the light emission of each light emitting element 11 by expanding the control signal by the control signal expander 141 when receiving the above control signal. Then, the driver 142 drives the light emitting element 11 based on the above data for each light emitting element 11. In this way, an operation of causing only the light emitting elements 11a to emit light (first illumination operation), an operation of causing only the light emitting elements 11b to emit light (second illumination operation) and an operation of causing all the light emitting elements 11 to emit light (first illumination operation + second illumination operation) can be performed.

In this embodiment, LEDs (Light Emitting Diodes) are adopted as the light emitting elements 11, and the first and second light emitting elements 11a, 11b have the same light distribution, i.e. a broad light distribution spreading in a wide range with respect to a light irradiating direction. Here, the "light distribution" indicates at which angle and with which intensity the light is irradiated and means changes or distributions with respect to light intensity angles of a primary light source (light emitting elements 11) and a secondary light source (optical system 13) as specified by the Japanese Industrial Standards (JIS). In the first illumination operation, the light emitted from the light emitting elements 11a is condensed by the condenser lenses 131 to have the light distribution changed, and introduced as first illumination light to the area to be illuminated 21 of the object 2 with the changed light distribution. As a result, an illumination range can be narrowed and the area to be illuminated 21 of the object 2 can be illuminated in an illumination mode having a relatively increased illuminance as shown in field (a) of FIG. 2. On the other hand, the second illumination operation is performed, whereby the light emitted from the light emitting elements 11b passes through a parallel plate part without passing through the condenser lenses 131 and is directly introduced as second illumination light to the area to be illuminated 21 of the object 2 without having the light distribution changed. As a result, the area to be illuminated 21 of the object 2 can be illuminated in a wide range, for example, as shown in field (c) of FIG. 2 (second illumination operation). Further, if all the light emitting elements 11 are caused to emit light (first illumination operation + second illumination operation), the area to be illuminated 21 of the object 2 can be illuminated in a wide range with an intermediate light distribution obtained by combining the light distribution in the first illumination operation and the light distribution in the second illumination operation, for example, as shown in field (b) of FIG. 2.

As described above, according to the first embodiment of the invention, the area to be illuminated 21 of the object 2 can be illuminated with three types of light distributions only by mutually independently controlling the light emission of the plurality of light emitting elements 11 constituting the light emitter 12. That is, the object 2 can be illuminated in a plurality of illumination modes with a reduced size and at low cost without providing a dedicated light emitter for each illumination mode. Further, since the light distribution of the illumination light irradiated to the area to be illuminated 21 can be changed by switching the turning on and off of the light emitting elements 11, the light distribution can be switched in a short time.

FIG. 3 is a diagram showing a second embodiment of the illumination device according to the invention. This second embodiment largely differs from the first embodiment basically in the configurations of a light emitter 12 and an optical system 13 and other components are the same as in the first embodiment. The following description is centered on points of difference and the same components are denoted by the same reference signs and not described.

In the light emitter 12 of the second embodiment, a plurality of light emitting elements 11 are arranged in a 2x16 matrix. The light emitting elements constituting an upper row function as first light emitting elements 11a, whereas the light emitting elements constituting the lower row function as second light emitting elements 11b. Further, in correspondence with these light emitting elements, a linear Fresnel lens 133 is provided as an example of the "first optical element" of the invention in the optical system 13. More particularly, in the optical system 13, the linear Fresnel lens 133 is provided to correspond to the upper row (first light emitting elements 11a) of the light emitter 12 on a plate-like transparent base material 132 arranged on an object side of the light emitter 12. This linear Fresnel lens 133 is obtained by applying the principle of a Fresnel lens to a cylindrical lens and a linear groove is provided in parallel to an arrangement direction X of the first light emitting elements 11a.

In an illumination device 1 thus configured, when only the first light emitting elements 11a emit light in accordance with a control signal given from an illumination controller 15, the light emitted from the first light emitting elements 11a is condensed in an arrangement direction Y of the linear groove by the linear Fresnel lens 133, with the result that an area to be illuminated 21 (see FIG. 1) of an object 2 can be linearly illuminated by narrowing an illumination range only in the arrangement direction Y (first illumination operation). On the other hand, when only the second light emitting elements 11b emit light, the area to be illuminated 21 of the object 2 can be illuminated with a broad light distribution kept as in the first embodiment (second illumination operation). As just described, the light emitted from the linear Fresnel lens 133 and the light emitted from the second light emitting elements 11b respectively correspond to examples of "first illumination light" and "second illumination light" of the invention.

As described above, according to the second embodiment, the area to be illuminated 21 of the object 2 can be illuminated with two types of light distributions only by mutually independently controlling the light emission of the plurality of light emitting elements 11 constituting the light emitter 12. That is, the object 2 can be illuminated in a plurality of illumination modes with a reduced size and at low cost without providing a light emitter for each illumination mode. Note that, in the second embodiment, the first light emitting elements 11a and the second light emitting elements 11b do not simultaneously emit light, but may simultaneously emit light if necessary. Further, a cylindrical lens may be provided as the "first optical element" of the invention instead of the linear Fresnel lens 133.

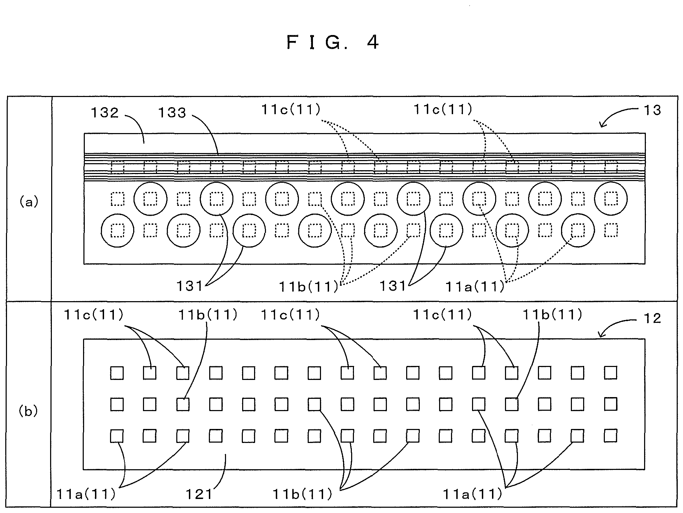

FIG. 4 is a diagram showing a third embodiment of the illumination device according to the invention. This third embodiment largely differs from the first embodiment in the configuration of an optical system 13 and other components are the same as in the first embodiment. The following description is centered on points of difference and the same components are denoted by the same reference signs and not described.

In the third embodiment, out of light emitting elements 11 constituting a light emitter 12, light emitting elements 11c constituting an upper row function as "third light emitting elements" of the invention. On the other hand, as in the first embodiment, the remaining light emitting elements function as first light emitting elements 11a and second light emitting elements 11b, which are alternately arranged. In the optical system 13, a linear Fresnel lens 133 is provided to correspond to the upper row (third light emitting elements 11c) of the light emitter 12 on a plate-like transparent base material 132 arranged on an object side of the light emitter 12 and a plurality of condenser lenses 131 are provided to face the first light emitting elements 11a in a one-on-one manner.

In an illumination device 1 thus configured, when only the first light emitting elements 11a emit light as in the first embodiment in accordance with a control signal given from an illumination controller 15 (see FIG. 1), an illumination range is two-dimensionally narrowed and an area to be illuminated 21 of an object 21 can be illuminated with a first light distribution (see field (a) of FIG. 2) having a relatively increased illuminance. Further, when only the second light emitting elements 11b emit light, the light emitted from the light emitting elements 11b passes through a parallel plate part without passing through the condenser lenses 131 and the linear Fresnel lens 133 and the area to be illuminated 21 of the object 2 can be illuminated in a wide range with a second light distribution (see field (c) of FIG. 2). When the first light emitting elements 11a and the second light emitting elements 11b are caused to emit light, the area to be illuminated 21 of the object 2 can be illuminated in a wide range with an intermediate light distribution (see field (b) of FIG. 2) obtained by combining the light distribution in the first illumination operation and the light distribution in the second illumination operation. Further, when only the third light emitting elements 11c emit light, the light emitted from the third light emitting elements 11c is condensed in an arrangement direction of a linear groove and the area to be illuminated 21 of the object 2 can be linearly illuminated with a third light distribution having an illumination range narrowed only in this arrangement direction.

As described above, according to the third embodiment, the area to be illuminated 21 of the object 2 can be illuminated with four types of light distributions only by mutually independently controlling the light emission of the plurality of light emitting elements 11 constituting the light emitter 12 using the optical system 13 in which the condenser lenses 131 and the linear Fresnel lens 133 are respectively provided as examples of the "first optical element" and the "second optical element" of the invention on the transparent base material 132. That is, the third embodiment is a combination of the first and second embodiments and can increase illumination modes. As just described, in the third embodiment, the light emitted from the condenser lenses 131 and the light emitted from the linear Fresnel lens 133 respectively correspond to examples of the "first illumination light" and the "second illumination light" of the invention.

Note that the configuration of the optical system 13 is not limited to those of the above embodiments. For example, an optical system 13 may be used in which a linear Fresnel lens 133 is provided to correspond to some light emitting elements 11c, out of a plurality of light emitting elements 11 constituting a light emitter 12, whereas condenser lenses 131 may be provided to correspond one-on-one to the remaining light emitting elements 11a. In this case, an illumination mode having an illumination range two-dimensionally narrowed by the light emission of the light emitting elements 11a and an illumination mode having a linear illumination range by the light emission of the light emitting elements 11c can be selectively performed.

### B. Inspection Apparatus Equipped with the Illumination Device

Next, an inspection apparatus for imaging an object by irradiating light to the object by the above illumination device 1 and inspecting the appearance of the object based on a captured image is described with reference to the drawings.

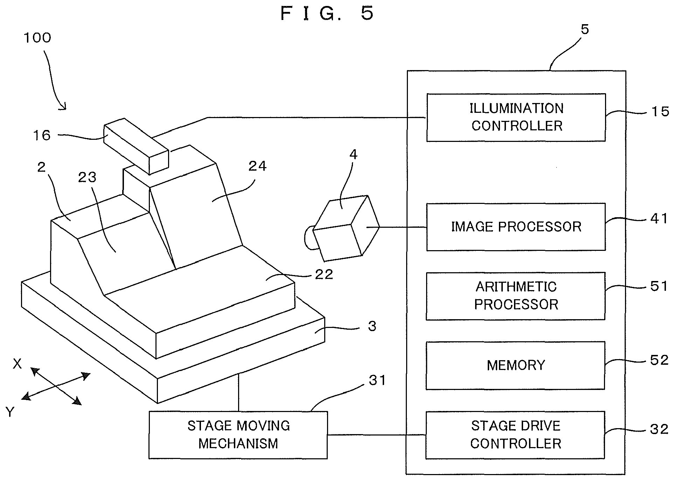

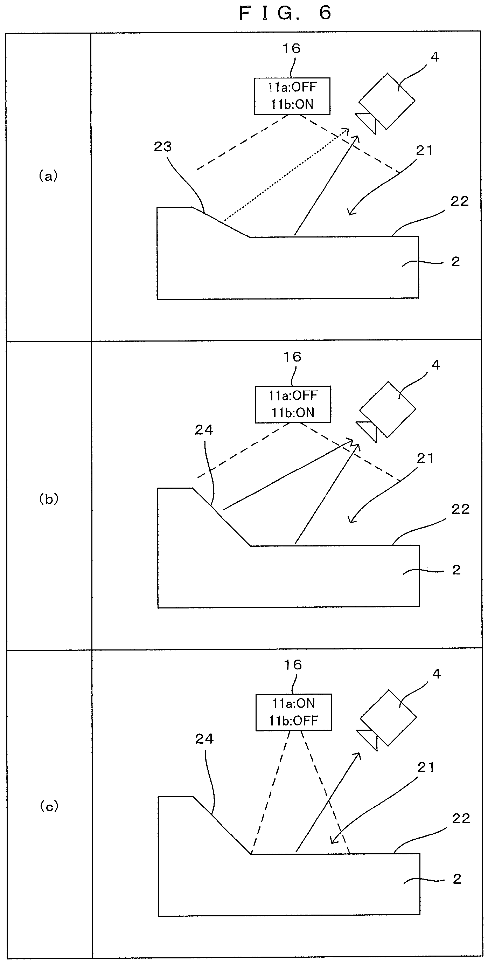

FIG. 5 is a diagram showing a first embodiment of the inspection apparatus equipped with the illumination device according to the invention. Further, FIG. 6 is a diagram schematically showing illumination modes and imaging modes in the inspection apparatus shown in FIG. 5. An inspection apparatus 100 is an apparatus for imaging and inspecting an object (object to be inspected) 2 placed on a stage 3 while illuminating the object by the illumination device shown in FIG. 1. In this inspection apparatus 100, an illumination head 16 is fixedly arranged above the stage 3. This illumination head 16 integrally holds the light emitter, the optical system and the drive unit, out of the constituent components of the illumination device, and illuminates the object 2 on the stage 3 from above in the illumination mode corresponding to a control signal from the illumination controller 15.

The stage 3 is provided movably in horizontal directions X, Y below the illumination head 16. This stage 3 is connected to a stage moving mechanism 31. The stage moving mechanism 31 operates in response to a movement command from a stage drive controller 32, whereby the stage 3 moves in the horizontal directions X, Y, enabling illumination light emitted from the illumination head 16 to be irradiated to a desired area of the object 2. That is, in this embodiment, the illumination head 16 is provided relatively movably with respect to the object 2, and an area to be illuminated 21 (FIG. 6) of the object 2 can be switched.

To image the area to be illuminated 21 illuminated by the illumination head 16, an imaging camera 4 is arranged obliquely above the stage 3. This imaging camera 4 images the area to be illuminated 21 and transfers image data corresponding to the obtained image to an image processor 41. On the other hand, the image processor 41 acquires the image data from the imaging camera 4 and performs an image processing such as binarization.

The inspection apparatus 100 includes a control unit 5 for controlling each apparatus component. The control unit 5 includes an arithmetic processor 51 and a memory 52 besides the illumination controller 15, the stage drive controller 32 and the image processor 41 described above. The memory 52 stores an inspection program and various pieces of data during as initial setting, an apparatus operation and the like. On the other hand, the arithmetic processor 51 includes a known CPU (Central Processing Unit) for performing a logical operation, and inspects the appearance of the object 2 by controlling each apparatus component in accordance with the inspection program stored in the memory 52. Particularly, in this embodiment, inspection accuracy is improved by switching the illumination mode according to an appearance inspection content.

In the inspection apparatus 100, an illumination device is constituted by the illumination controller 15 and the illumination head 16, and a specific configuration thereof is the same as the illumination device 1 shown in FIG. 1. Imaging can be so performed as not to create shadows by illumination for the area to be illuminated 21 having a complicated shape, for example, by illuminating the object 2 in the illumination mode shown in field (c) of FIG. 2. On the other hand, uneven shadows present in the area to be illuminated 21 can also be imaged by illuminating the object 2 in the illumination mode shown in field (a) of FIG. 2, and inspection targets are easily specified when unevenness is caused by defects or scratches. Thus, the illumination mode is desirably switched according to the shape and surface state of the object 2. Concerning this point, a specific switch of the illumination mode is described by illustrating an example of the object 2. Note that, here, the switch of the illumination mode in imaging the object 2 having a horizontal surface 22, a gentle slope 23 and a steep slope 24 and inspecting the horizontal surface 22 based on those captured images is described with reference to FIG. 6.

When the object 2 to be inspected is placed on the stage 3 by an unillustrated transfer robot or user, the arithmetic processor 51 controls each apparatus component to illuminate, image and inspect the object 2 in accordance with the inspection program stored in the memory 52 in advance. If light specularly reflected by a slope is directly incident on the imaging camera 4 in imaging the object 2 having the slope other than the horizontal surface 22 to be inspected, the captured image may be possibly adversely affected. If the gentle slope 23 is present besides the horizontal surface 22 in an area illuminated by the illumination head 16, out of the surface of the object 2, i.e. in the area to be illuminated 21, for example, as shown in field (a) of FIG. 6, little light is specularly reflected by the gentle slope 23 and directly incident on the imaging camera 4. Thus, the captured image is not adversely affected and the horizontal surface 22 can be satisfactorily inspected even if the object 2 is illuminated with a broad second light distribution spreading in a wide range with respect to an irradiating direction of the light. However, if the stage 3 moves and the steep slope 24 becomes present besides the horizontal surface 22 in the area to be illuminated 21 as shown in field (b) of FIG. 6, more light is specularly reflected by the steep slope 24 and directly incident on the imaging camera 4 and it may become difficult to obtain a proper image by the imaging camera 4. In such a case, the incidence of the reflected light from the steep slope 24 on the imaging camera 4 can be suppressed and an image suitable for the inspection of the horizontal surface 22 can be captured by the imaging camera 4 by switching the illumination by the illumination head 16 to the one with a first light distribution (see field (a) of FIG. 2) having a narrowed illumination range.

As described above, according to the inspection apparatus 100 equipped with the illumination device according to the invention, the illumination mode can be switched according to the shape and the like of the object 2 and an image suitable for inspection can be captured, with the result that inspection can be performed with high accuracy.

Further, since the illumination mode can be switched by turning on and off the light emitting elements 11, i.e. by an electrical switching control, a time required for the switch can be drastically reduced as compared to the conventional technique for mechanically switching the illumination mode. Particularly, the inspection apparatus 100 has to inspect various types of objects 2 and a technical feature of being able to switch the illumination mode in a short time is very useful.

Further, although an inspection result is obtained by processing a plurality of images obtained by illumination/imaging performed a plurality of number of times in an inspection apparatus using a conventional illumination device, the number of times of imaging to be performed in one inspection can be reduced in some cases, utilizing a property that the light distribution of the illumination light can be changed by the illumination head 16 in the inspection apparatus 100 according to this embodiment and, in this case, an inspection time can be drastically reduced.

As just described, in the embodiment shown in FIGS. 5 and 6, the illumination controller 15 and the illumination head 16 function as an "illumination device" of the invention, the imaging camera 4 functions as an "imager" of the invention, and a combination of these with the stage 3 functions as an "imaging apparatus" of the invention.

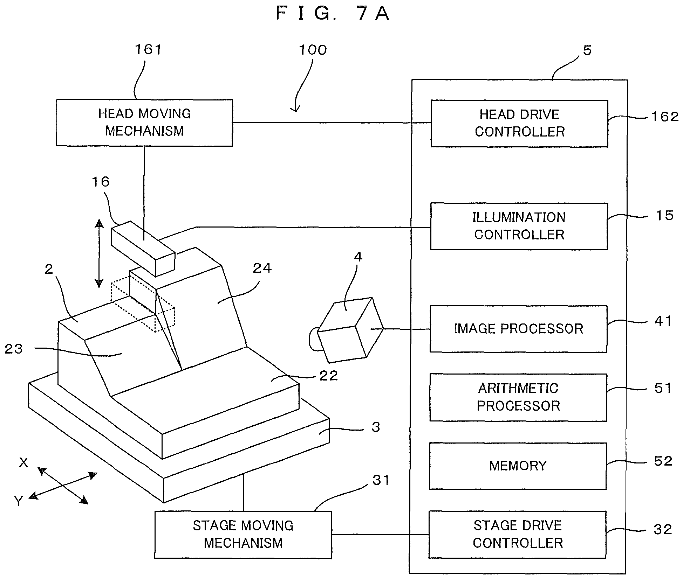

Although the illumination head 16 is fixedly arranged in the above inspection apparatus 100, the illumination head 16 may be configured to be movable upward and downward in a vertical direction, for example, as shown in FIG. 7A (second embodiment of the inspection apparatus). In this embodiment, a head moving mechanism 161 is connected to the illumination head 16 and the head moving mechanism 161 operates in response to an elevation command given from a head drive controller 162 provided in a control unit 5, whereby a relative positional relationship of the illumination head 16 with respect to the object 2 in the vertical direction can be adjusted. Thus, illumination conditions can be optimized by changing a distance from the illumination head 16 to the object 2, i.e. an irradiation distance of illumination light by this position adjustment. As just described, in the second embodiment, a combination of the head moving mechanism 161 and the head drive controller 162 corresponds to examples of a "head driver" and a "position adjuster" of the invention.

Further, the illumination head 16 may be configured to be rotatable about an axis of rotation AX1 parallel to a horizontal direction (third embodiment of the inspection apparatus). In this embodiment, a head rotating mechanism 163 is connected to the illumination head 16 and the head rotating mechanism 163 operates in response to a rotation command given from a head drive controller 162 provided in a control unit 5, whereby a relative positional relationship with respect to the object 2 can be adjusted by rotating the illumination head 16 about the axis of rotation AX1. Thus, an irradiation surface for the illumination light can be adapted to the inclination of the area to be illuminated 21 about the axis of rotation AX1 by this position adjustment. As just described, in the third embodiment, a combination of the head rotating mechanism 163 and the head drive controller 162 corresponds to examples of the "head driver" and the "position adjuster" of the invention.

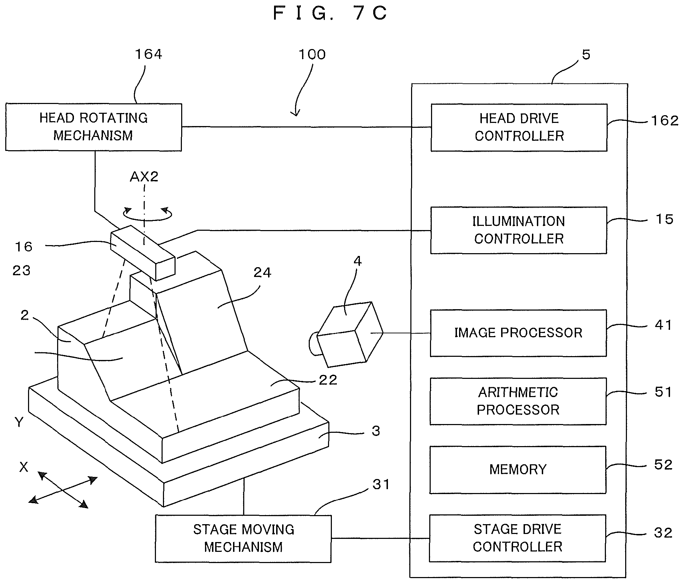

A rotating direction is not limited to the direction about the axis of rotation AX1. For example, the illumination head 16 may be configured to be rotatable about an axis of rotation AX2 different from the axis of rotation AX1, for example, as shown in FIG. 7C (fourth embodiment of the inspection apparatus). In this embodiment, a head rotating mechanism 164 is connected to the illumination head 16 and the head rotating mechanism 164 operates in response to a rotation command given from a head drive controller 162 provided in a control unit 5, whereby a relative positional relationship with respect to the object 2 can be adjusted by rotating the illumination head 16 about the axis of rotation AX2. Thus, an irradiation surface for the illumination light can be adapted to the inclination of the area to be illuminated 21 about the axis of rotation AX2 by this position adjustment. As just described, in the fourth embodiment, a combination of the head rotating mechanism 164 and the head drive controller 162 corresponds to examples of the "head driver" and the "position adjuster" of the invention.

Relative position adjustments of the illumination head 16 with respect to the object 2 are not limited to those in a single direction, and these may be complexly combined. For example, the illumination head 16 may be provided to be movable about the vertical direction and the axes of rotation AX1, AX2, and the illumination head 16 may be rotated to adjust the relative positional relationship with respect to the object 2 by being moved in three directions by a head moving/rotating mechanism (not shown) in response to a command from the head drive controller 162. Note that a combination of the head moving/rotating mechanism and the head drive controller 162 corresponds to examples of the "head driver" and the "position adjuster" of the invention here.

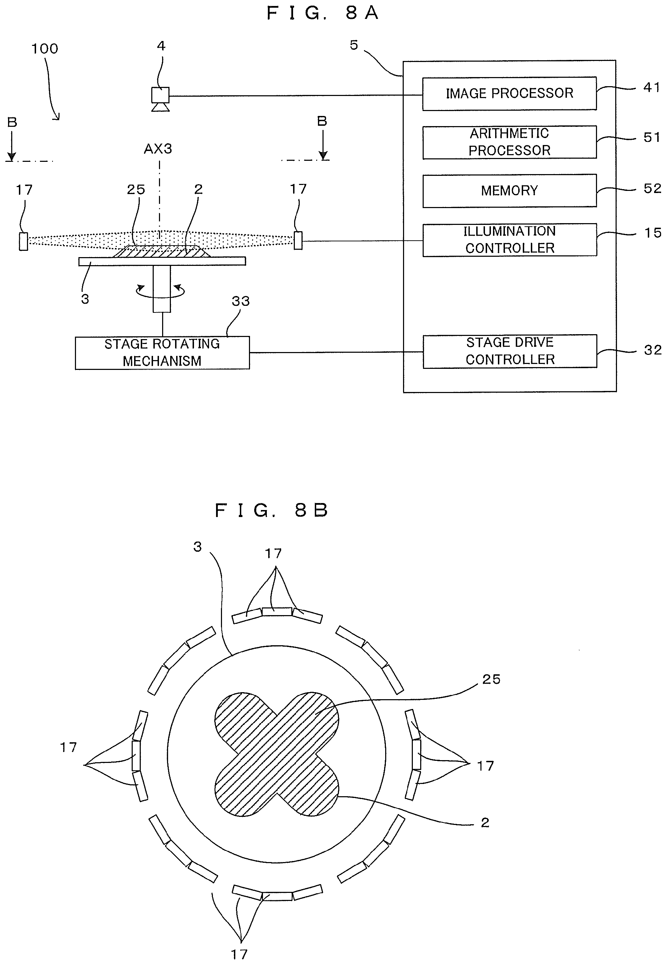

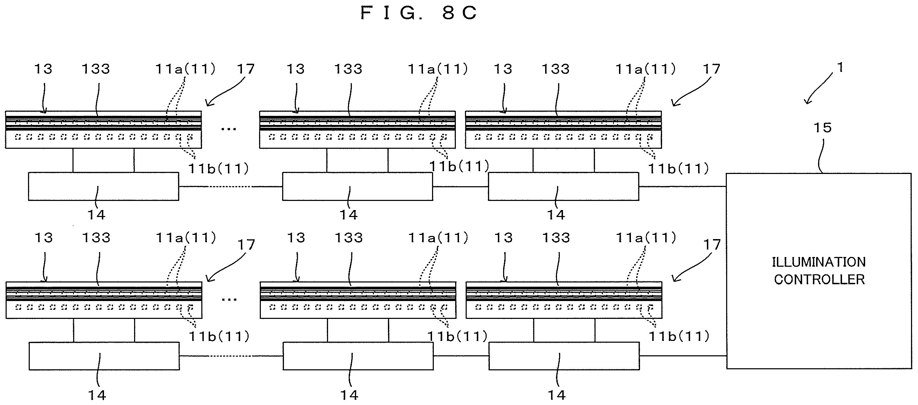

FIG. 8A is a diagram showing a fifth embodiment of the inspection apparatus equipped with the illumination device according to the invention. Further, FIG. 8B is a plan view in section along line B-B in FIG. 8A. Furthermore, FIG. 8C is a diagram schematically showing a connection relationship of an illumination head and an illumination controller. In an inspection apparatus 100 according to this fifth embodiment, a stage 3 is rotatable about an axis of rotation AX3 extending in a vertical direction. The stage 3 is connected to a stage rotating mechanism 33. The stage rotating mechanism 33 operates in response to a rotation command from a stage drive controller 32, whereby the stage 3 rotates about the axis of rotation AX3. Further, a plurality of illumination heads 17 are arranged to surround an object 2 placed on the stage 3, and can laterally illuminate the object 2 in a ring-like manner. As just described, the plurality of illumination heads 17 function as lateral light sources for ring illumination.

Each illumination head 17 integrally holds the light emitter 12, the optical system 13 and the drive unit 14, out of the constituent components of the illumination device 1 shown in FIG. 3. The drive unit 14 of the illumination head 17 is cable-connected to the illumination controller 15 by two systems as shown in FIG. 8C. As in the above illumination device 1, when serial data is transferred as a control signal to each drive unit 14 from the illumination controller 15, the control signal is expanded and a forward current value of LEDs, a light modulation value by PWM and turning on/off and the like serving as control information are transferred to the driver 142 (see FIG. 1). In this way, only the light emitting elements 11a emit light, whereby linear illumination light is irradiated to an object 2 on the stage 3 as shown in FIG. 8A, and the object 2 is illuminated over the entire periphery with a first light distribution narrowed from an angle parallel to a surface to be inspected 25 of the object 2. On the other hand, although not shown in FIG. 8A, only the light emitting elements 11b emit light, whereby the object 2 can be laterally illuminated in a wide range.

An imaging camera 4 is arranged vertically above the object 2 illuminated in this way as shown in FIG. 8A, and the surface to be inspected 25 of the object 2 can be imaged vertically from above. Accordingly, the surface to be inspected 25 of the object 2 can be illuminated with two types of light distributions only by mutually independently controlling the light emission of the light emitting elements 11. That is, the object 2 can be illuminated in a plurality of illumination modes with a reduced size and at low cost without providing a light emitter for each illumination mode. Particularly, in this embodiment, the object 2 serving as an object to be inspected is located in a central part of a ring illumination system constituted by the plurality of illumination heads 17, and imaging by the imaging camera 4 is performed with the object 2 illuminated over the entire periphery with the above first light distribution, i.e. with dark-field illumination performed at a low angle. Thus, fine scratches and the like present in the surface to be inspected 25 can be imaged. As a result, the appearance of the object 2 can be inspected with high accuracy.

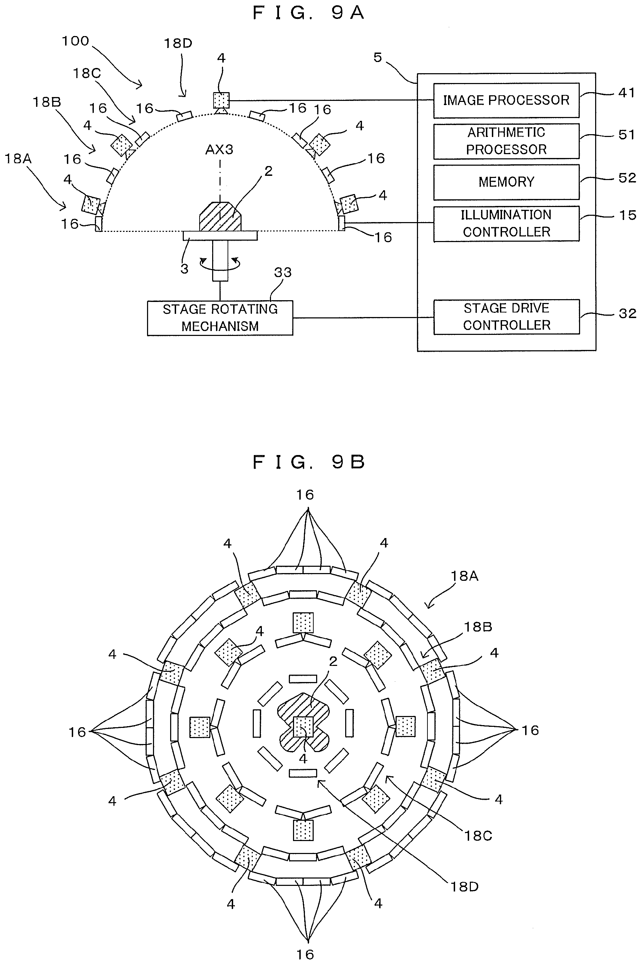

FIG. 9A is a diagram showing a sixth embodiment of the inspection apparatus equipped with the illumination device according to the invention. Further, FIG. 9B is a partial plan view of the inspection apparatus shown in FIG. 9A. An inspection apparatus 100 according to this sixth embodiment largely differs from the fifth embodiment in the configurations of an illumination device and an imaging camera, and other components are basically common to the fifth embodiment. Thus, the following description is centered on points of difference and the same components are denoted by the same reference signs and not described.

In the sixth embodiment, a stage 3 on which an object 2 serving as an object to be inspected is placed is connected to a stage rotating mechanism 33, and the stage rotating mechanism 33 operates in response to a rotation command from a stage drive controller 32 to rotate the stage 3 about an axis of rotation AX3 as in the fifth embodiment. Further, a plurality of illumination heads 17 are arranged to surround the object 2 placed on the stage 3 in a dome-like manner. More particularly, four ring illumination systems 18A to 18D having mutually different ring diameters are provided, and the object 2 can be illuminated in a ring-like manner in four stages including a lateral stage, a first oblique stage, a second oblique stage and an upper stage.

The plurality of illumination heads 16 are so arranged that the ring illumination system 18A in the first stage having a largest ring diameter, out of these ring illumination systems, surrounds the object 2 placed on the stage 3, and the object 2 can be laterally illuminated in a ring-like manner. Further, in this ring illumination system 18A, when only the light emitting elements 11a emit light, the object 2 can be laterally illuminated in a ring-like manner with a first light distribution (see field (a) of FIG. 2) having a two-dimensionally narrowed illumination range. Further, when only the light emitting elements 11b emit light, the object 2 can be laterally illuminated in a ring-like manner with a second light distribution (see field (c) of FIG. 2) having illumination light spreading in a wide range. Furthermore, when the light emitting elements 11a, 11b emit light, the object 2 can be laterally illuminated in a ring-like manner with an intermediate light distribution (see field (b) of FIG. 2). The other ring illumination systems 18B to 18D are configured similarly to the ring illumination system 18A except in having different ring diameters and different illumination light irradiating directions. As just described, in this embodiment, the object 2 on the stage 3 can be illuminated with three types of mutually different light distributions. In addition, an illuminance distribution and a light distribution in the ring illumination can be adjusted by controlling a light modulation value by PWM. This point also applies to embodiments described later.

Further, an imaging camera 4 is arranged at each of several positions between the illumination heads 16 to image the object 2 at various angles. Note that the imaging cameras 4 are marked with dots in FIGS. 9A and 9B to be visually distinguished from the illumination heads 16. This point also applies to embodiments described later.

In the inspection apparatus 100 thus configured, the object 2 can be illuminated with three types of light distributions only by mutually independently controlling the light emission of the light emitting elements 11. That is, the object 2 can be illuminated in a plurality of illumination modes with a reduced size and at low cost without providing a light emitter for each illumination mode.

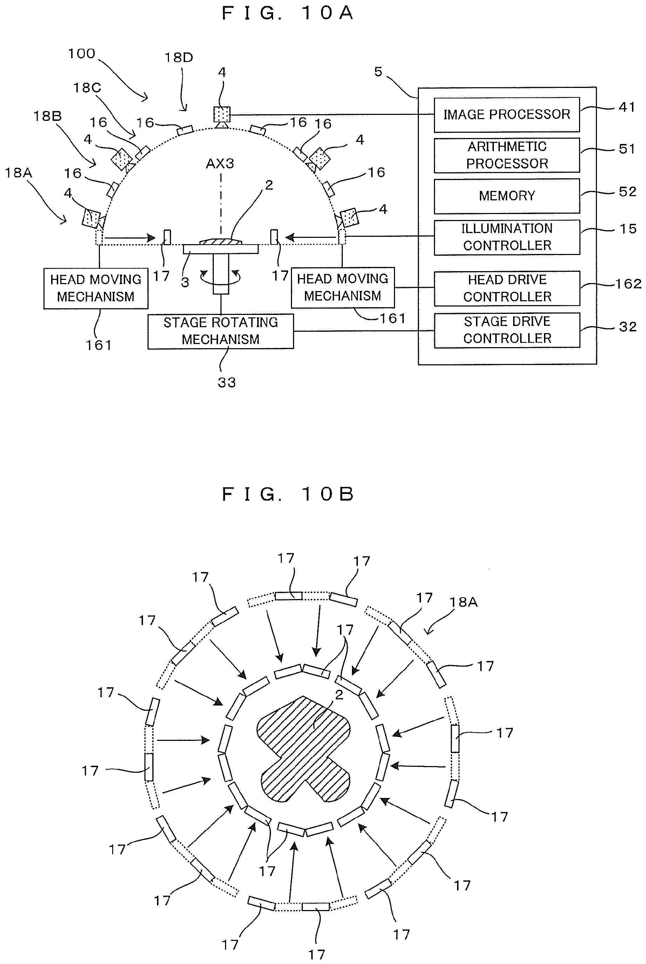

Note that although all the ring illumination systems 18A to 18D are constituted by the illumination heads 16 in the sixth embodiment, low-angle ring illumination may be used as in the fifth embodiment to inspect scratches and the like present in the upper surface of the object 2 serving as an object to be inspected. Specifically, the ring illumination system 18A in the first stage may be constituted by illumination heads 17. However, the ring diameter of the ring illumination system 18A is large and an illumination light irradiation distance from the illumination heads 17 to the object 2 is relatively long. Thus, it may become difficult to satisfactorily image scratches and the like present in the upper surface of the object 2 due to a reduced illuminance and the spread of the illumination light. Accordingly, it is preferable that head moving mechanisms 161 are connected to the illumination heads 17 constituting the ring illumination system 18A and the illumination heads 17 are brought closer to the object 2 when the object 2 is illuminated by the ring illumination system 18A (seventh embodiment). An inspection apparatus 100 according to the seventh embodiment is described below with respect to FIGS. 10A and 10B.

FIG. 10A is a diagram showing the seventh embodiment of the inspection apparatus equipped with the illumination device according to the invention. Further, FIG. 10B is a diagram schematically showing a moving operation of illumination heads in the inspection apparatus shown in FIG. 10A. The inspection apparatus 100 according to this seventh embodiment largely differs from the sixth embodiment in the configuration of an illumination device and other components are the same as in the sixth embodiment. The following description is centered on points of difference and the same components are denoted by the same reference signs and not described.

Although four ring illumination systems 18A to 18D having mutually different ring diameters are provided in the seventh embodiment as in the six embodiment, the ring illumination system 18A, out of those, is constituted by illumination heads 17. In addition, as shown in FIG. 10A, a head moving mechanism 161 is connected to each illumination head 17. The head moving mechanism 161 operates in response to a movement command given from a head drive controller 162 for each illumination head 17, whereby a relative positional relationship of the illumination head 17 with respect to the object 2 in a radial direction of the ring illumination system 18A can be adjusted. Thus, illumination conditions can be optimized by changing a distance from the illumination head 17 to the object 2, i.e. an illumination light irradiation distance by this position adjustment.

In the seventh embodiment thus configured, some of the illumination heads 17 constituting the ring illumination system 18A are brought closer to the object 2 placed on a stage 3 as shown in FIG. 10B according to the size of the object 2 and only the illumination heads 17 brought closer are turned on, whereby dark-field illumination at a low angle can be performed with high illuminance. As a result, fine scratches and the like present in the upper surface of the object 2 can be satisfactorily imaged and the appearance of the object 2 can be inspected with high accuracy. As just described, in the seventh embodiment, a combination of the head moving mechanism 161 and the head drive controller 162 corresponds to examples of the "head driver" and the "position adjuster" of the invention.

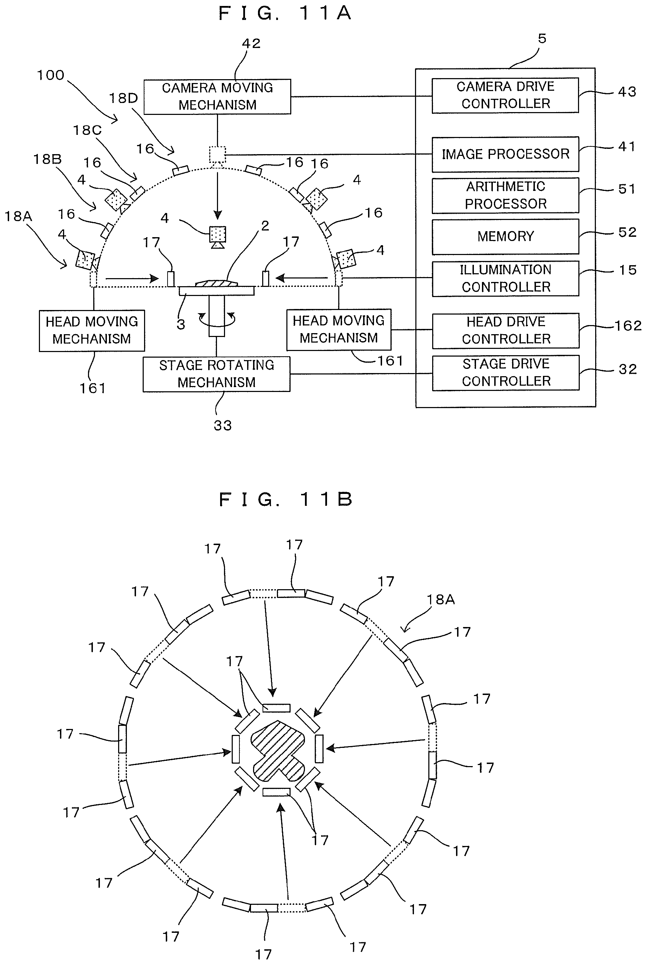

Note that although half of the illumination heads 17 constituting the ring illumination system 18A are brought closer to the object 2 in FIG. 10B, the selection of the illumination heads 17 to be moved and a moving distance are arbitrary and preferably set according to the size of the object 2. For example, it is desirable to reduce the number of the illumination heads 17 to be selected and increase the moving distance as the object 2 becomes smaller. Further, as shown in FIGS. 11A and 11B, an imaging camera 4 arranged vertically above the object 2 is preferably brought closer to the object 2 as a range of dark-field illumination by the illumination heads 17 becomes narrower (eighth embodiment). In this eighth embodiment, a camera moving mechanism 42 for moving the above imaging camera 4 upward and downward in the vertical direction is connected to the above imaging camera 4. The camera moving mechanism 42 operates in response to an elevation command given from a camera drive controller 43 provided in a control unit 5, whereby a relative positional relationship with respect to the object 2 can be adjusted by moving the imaging camera 4 in the vertical direction. Thus, a sufficient quantity of light coming from the dark-field illuminated object 2 is received by the imaging camera 4 and a dark-field image of the object 2 can be reliably captured. As a result, fine scratches and the like present in the upper surface of the object 2 can be imaged with good image quality and accuracy in inspecting the appearance of the object 2 can be further improved.

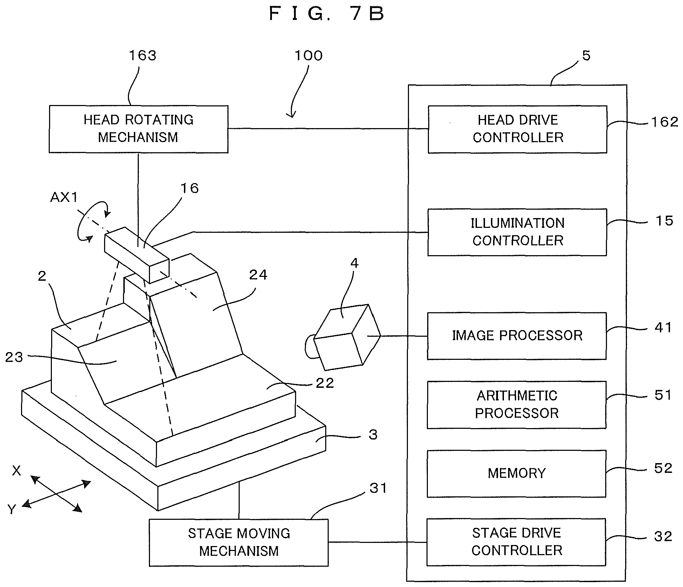

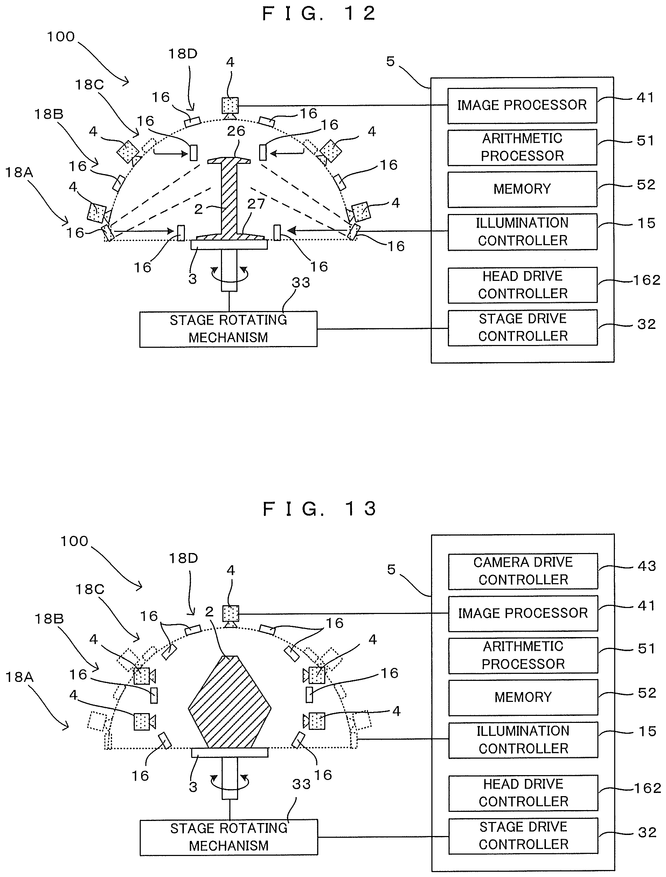

FIG. 12 is a diagram showing a ninth embodiment of the inspection apparatus equipped with the illumination device according to the invention. An inspection apparatus 100 according to this ninth embodiment is obtained by adding head moving/rotating mechanisms (not shown) and a head drive controller 162 to the inspection apparatus 100 shown in FIGS. 9A and 9B. The head moving/rotating mechanism has a function of adjusting a relative position of an illumination head 16 with respect to an object 2 placed on a stage 3 by combining the head moving mechanism 161 shown in FIG. 7A and the head rotating mechanism 163 shown in FIG. 7B. The head moving/rotating mechanism is connected for each of the illumination heads 16 arranged in a dome-like manner. The head moving/rotating mechanism operates in response to a movement/rotation command given from the head drive controller 162 provided in a control unit 5, whereby a relative positional relationship of the illumination head 16 with respect to the object 2 can be adjusted. Note that the other configuration is basically the same as the inspection apparatus 100 shown in FIGS. 9A and 9B.

In the inspection apparatus 100 thus configured, the object 2 can be rationally imaged by adjusting the positions of the illumination heads 16 according to the shape of the object 2 placed on the stage 3. For example, in inspecting an object 2 having a substantially I-shaped cross-section as shown in FIG. 12, the object 2 is illuminated by the illumination heads 16 of ring illumination systems 18A, 18C after:
Some of the illumination heads 16 constituting the ring illumination system 18A are moved radially inwardly of the ring illumination system 18A toward the object 2 and the remaining illumination heads 16 are rotated obliquely upward; and
Some of the illumination heads 16 constituting the ring illumination system 18C are moved radially inwardly of the ring illumination system 18C toward the object 2; whereby images suitable for inspecting scratches in an upper flat surface part 26 and a lower flat surface part 27 of the object 2 can be simultaneously captured. As a result, fine scratches and the like present in the upper flat surface part 26 and the lower flat surface part 27 can be satisfactorily imaged, and the appearance of the object 2 having a complicated shape can be inspected in a short time and with high accuracy. As just described, in the ninth embodiment, a combination of the head moving/rotating mechanism and the head drive controller 162 corresponds to examples of the "head driver" and the "position adjuster" of the invention.

Note that, in this embodiment, a stage moving mechanism for moving the stage 3 upward and downward may be incorporated into a stage rotating mechanism 33 and a positional relationship of the object 2 and the illumination heads 16 may be adjusted by moving the stage 3 upward or downward according to the shape of the object 2 or the like. Further, some or all of the illumination heads 16 may be replaced by illumination heads 17 so that dark-field illumination can be performed. These points also apply to the next embodiment.

FIG. 13 is a diagram showing a tenth embodiment of the inspection apparatus equipped with the illumination device according to the invention. An inspection apparatus 100 according to this tenth embodiment is obtained by adding camera moving/rotating mechanisms (not shown) and a camera drive controller 43 to the inspection apparatus 100 shown in FIG. 12. The camera moving/rotating mechanism has both a function of moving the imaging camera 4 toward and away from the object 2 by a mechanism similar to the head moving/rotating mechanism and a function of changing an imaging angle by rotating the imaging camera 4 about an axis of rotation. Thus, the camera moving/rotating mechanism has a function of adjusting a relative position of an imaging camera 4 with respect to an object 2 placed on a stage 3. The camera moving/rotating mechanism is connected for each imaging camera 4. The camera moving/rotating mechanism operates in response to a movement/rotation command given from the camera drive controller 43 provided in an control unit 5, whereby a relative positional relationship of the imaging camera 4 with respect to the object 2 can be adjusted. Note that the other configuration is basically the same as the inspection apparatus 100 shown in FIG. 12.

In the inspection apparatus 100 thus configured, the object 2 can be rationally imaged by adjusting the positions of the imaging cameras 4 together with the positions of illumination heads 16 according to the shape of the object 2 placed on the stage 3. For example, by illuminating the object 2 by the illumination heads 16 of ring illumination systems 18A to 18D after the illumination heads 16 and the imaging cameras 4 are positioned to surround the object 2 as shown in FIG. 13, the object 2 can be imaged while being uniformly illuminated. As a result, the appearance of the object 2 can be inspected in a short time and with high accuracy. As just described, in the tenth embodiment, a combination of a head moving/rotating mechanism and a head drive controller 162 corresponds to examples of the "head driver" and the "position adjuster" of the invention.

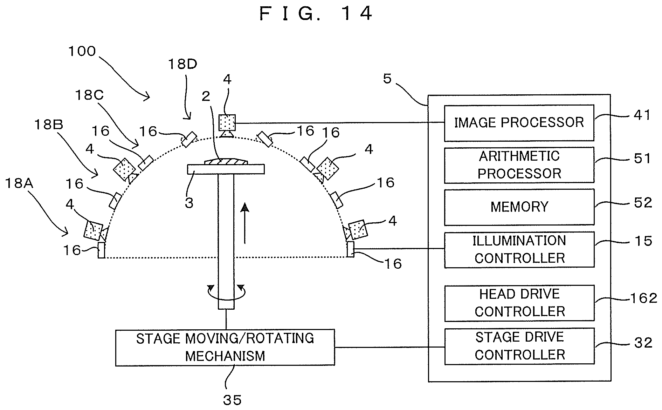

FIG. 14 is a diagram showing an eleventh embodiment of the inspection apparatus equipped with the illumination device according to the invention. An inspection apparatus 100 according to this eleventh embodiment is provided with a stage moving/rotating mechanism 35 instead of the stage rotating mechanism 33 of the inspection apparatus 100 shown in FIG. 12. Note that the other configuration is the same as the inspection apparatus 100 according to the tenth embodiment.

The stage moving/rotating mechanism 35 is obtained by adding a stage moving mechanism for moving a stage 3 upward and downward in the vertical direction to the stage rotating mechanism 33, and connected to the stage 3 on which an object 2 serving as an object to be inspected is placed. The stage moving/rotating mechanism 35 operates in response to a movement command from a stage drive controller 32, whereby the object 2 can be positioned to a position suitable for imaging by moving the stage 3 upward or downward.

In the inspection apparatus 100 thus configured, the object 2 can be rationally imaged by adjusting the height position of the stage 3 and the positions of illumination heads 16 in the vertical direction according to the size of the object 2 placed on the stage 3. For example, in inspecting an object 2 in the form of a thin plate as shown in FIG. 14, the object 2 is illuminated by the illumination heads 16 of a ring illumination system 18D after:
The object 2 is located immediately below an imaging camera 4 having an imaging surface (not shown) facing vertically downward by moving the stage 3 upward; and
The illumination heads 16 constituting the ring illumination system 18D proximate to the above imaging camera 4 are rotated to illuminate in inward directions; whereby an image suitable for inspecting the object 2 can be captured. As a result, an illumination adjustment which cannot be compensated for only by a movable arrangement of the illumination heads 16 can be made, and the versatility of the inspection apparatus 100 can be enhanced. As just described, in the eleventh embodiment, a combination of a head moving/rotating mechanism and a head drive controller 162 corresponds to examples of the "head driver" and the "position adjuster" of the invention.

### C. Miscellaneous

Note that the invention is not limited to the above embodiments and various changes other than those described above can be made without departing from the gist of the invention. For example, although the light distribution is changed using the condenser lenses 131 and the linear Fresnel lens 133 in the above embodiments, the light distribution may be changed by other optical lens(es).

Further, although a control signal is transferred by two cable systems, for example, as shown in FIG. 8C, in the inspection apparatus 100 for illuminating the object 2 using the plurality of illumination heads 16 (or 17), a control signal transfer system is not limited to this and a control signal may be transferred by one, three or more cable systems.

Although the object 2 is imaged while being turned together with the stage 3 in the inspection apparatuses 100 according to the fifth to eleventh embodiments, it is not an essential requirement to turn or rotate the object 2 and a series of processes (illumination/imaging/inspection) may be performed with the object 2 fixed.

Further, although the plurality of illumination heads 16 (or 17) are arranged in a ring-like manner to constitute the ring illumination systems 18A to 18D in the inspection apparatus 100 according to the fifth to eleventh embodiments, the arrangement of the illumination heads 16 (or 17) is not limited to the ring-like arrangement and the illumination heads 16 (or 17) may be arranged in a polygonal manner.

Further, although the plurality of illumination heads 16 (or 17) are arranged in a dome-like manner by providing four ring illumination systems 18A to 18D in the inspection apparatus 100 according to the sixth to eleventh embodiments, the number, the arrangement and the like of the ring illumination systems are not limited to these.

Furthermore, although the invention is applied to the inspection apparatus 100 for inspecting the appearance of the object 2 while illuminating the object 2 by the illumination device 1 according to the invention in the above embodiments, an application target of the illumination device 1 is not limited to this. For example, the illumination device 1 can be applied as an illumination device equipped in an imaging apparatus for imaging and observing a discharge port of a nozzle while illuminating the nozzle for discharging a liquid (processing liquid, ink or the like) from the discharge port, an imaging apparatus for imaging and observing a cultured specimen such as cells while illuminating the specimen, an imaging apparatus for imaging and observing a shaped object by a three-dimensional printer while illuminating the shaped object, or the like.

Although the invention has been described by way of the specific embodiments above, this description is not intended to be interpreted in a limited sense. By referring to the description of the invention, various modifications of the disclosed embodiments will become apparent to a person skilled in this art similarly to other embodiments of the invention. Hence, appended claims are thought to include these modifications and embodiments without departing from the true scope of the invention.

### [Industrial Applicability]

The present invention is applicable to an illumination device and an illumination method for illuminating an object and an imaging apparatus using the illumination device in general.

### [Reference Signs List]

- 1: illumination device
- 2: object
- 3: stage
- 4: imaging camera (imager)
- 11a: first light emitting element
- 11b: second light emitting element
- 11c: third light emitting element
- 12: light emitter
- 13: optical system
- 15: illumination controller
- 16, 17: illumination head
- 31: stage moving mechanism (position adjuster)
- 32: stage drive controller (position adjuster)
- 33: stage rotating mechanism
- 35: stage moving/rotating mechanism (position adjuster)
- 100: inspection apparatus
- 131: condenser lenses
- 133: linear Fresnel lens
- 161: head moving mechanism (position adjuster)
- 162: head drive controller (position adjuster)
- 163, 164: head rotating mechanism (position adjuster)

## Claims

1. An illumination device for illuminating an object, comprising:
a light emitter including first light emitting elements and second light emitting elements configured to emit light toward the object;
an optical system including a first optical element configured to change a light distribution of light emitted from the first light emitting elements to a first light distribution, the optical system introducing light emitted from the second light emitting elements with a second light distribution different from the first light distribution to the object; and
an illumination controller configured to mutually independently control the light emission of the first light emitting elements and the second light emitting elements.

2. The illumination device according to claim 1, wherein:
the first light emitting elements and the second light emitting elements emit light having the second light distribution; and
the optical system introduces the light emitted from the second light emitting elements to the object with the second light distribution kept.

3. The illumination device according to claim 1, wherein:
the optical system includes a second optical element configured to change the light distribution of the light emitted from the second light emitting elements to the second light distribution.

4. The illumination device according to claim 3, wherein:
the light emitter further includes third light emitting elements configured to emit light toward the object;
the first light emitting elements and the third light emitting elements emit light having a third light distribution different from the first light distribution and the second light distribution;
the optical system introduces the light emitted from the third light emitting elements to the object with the third light distribution kept; and
the illumination controller controls the light emission of the third light emitting elements independently of the light emission of the first light emitting elements and the second light emitting elements.

5. The illumination device according to claim 3 or 4, wherein:
the first optical element is a condenser lens, whereas the second optical element is a cylindrical lens or linear Fresnel lens.

6. The illumination device according to any one of claims 1 to 5, further comprising an illumination head provided relatively movably with respect to the object while integrally holding the light emitter and the optical system.

7. The illumination device according to claim 6, further comprising a head driver configured to move the illumination head with respect to the object.

8. An illumination method of illuminating an object using first light emitting elements and second light emitting elements, the illumination method enabling a light distribution of light for illuminating an object to be adjusted by performing at least one of:
a first illumination operation of introducing light obtained by changing a light distribution of light emitted from the first light emitting elements as first illumination light to the object; and
a second illumination operation of introducing light obtained by changing a light distribution of light emitted from the second light emitting elements to a light distribution different from the light distribution of the first illumination light or light emitted from the second optical element as second illumination light to the object; by mutually independently controlling the light emission of the first light emitting elements and the second light emitting elements.

9. An imaging apparatus, comprising:
a stage configured to hold an object;
the illumination device according to claim 6 configured to illuminate the object held on the stage; and
an imager configured to image the object illuminated by the illumination device.

10. The imaging apparatus according to claim 9, further comprising:
a position adjuster configured to adjust a relative positional relationship of the illumination head with respect to the object by moving at least one of the stage and the illumination head.

11. The imaging apparatus according to claim 10, wherein:
the position adjuster includes a head moving mechanism configured to move the illumination head.

12. The imaging apparatus according to claim 10 or 11, wherein:
the position adjuster includes a stage moving mechanism configured to move the stage.
